# EUROPÄISCHE PATENTANMELDUNG

(11) **EP 1 199 321 A1**
(43) Veröffentlichungstag der Anmeldung: **24.04.2002**
(21) Anmeldenummer: 01123286.5
(22) Anmeldetag: 05.10.2001
(51) Int. Cl.: C08G 18/38, C08G 18/80, C09D 175/02

(54) **Lackbindemittel mit Harnstoff- und/oder Hydantoinstrukturen, ein Verfahren zu ihrer Herstellung und deren Verwendung**

(30) Priorität: 17.10.2000 DE 10051394
(71) Anmelder: BAYER AG, 51368 Leverkusen (DE)
(72) Erfinder: Gertzmann, Rolf, Dr., 51377 Leverkusen (DE); Schmalstieg, Lutz, Dr., 50676 Köln (DE); Mazanek, Jan, Dr., 51061 Köln (DE); Hausstätter, Bernd, 51381 Leverkusen (DE)

(57) **Zusammenfassung**

Die Erfindung betrifft Lackbindemittel mit Harnstoff- und/oder Hydantoinstrukturen und ein Verfahren zu deren Herstellung. Die erfindungsgemäßen Bindemittel bilden Lacke mit einer hohen Temperaturbeständigkeit und einer guten Löt-bzw. Verzinnbarkeit.

## Beschreibung

Die Erfindung betrifft neue Lackbindemittel mit Harnstoff- und/oder Hydantoinstrukturen und ein Verfahren zu deren Herstellung. Die erfindungsgemäßen Bindemittel bilden Lacke mit einer hohen Temperaturbeständigkeit und einer guten Löt- bzw. Verzinnbarkeit.

Die Elektro- und Elektronikindustrie benötigt große Mengen beschichteter Drähte zur Herstellung von Motoren, Transformatoren, Bildröhren und anderen Produkten. Da das Design moderner Maschinen mehr und mehr nach kleineren Motoren, Spulen, Transformatoren usw. verlangt, und diese bei höherer Temperatur arbeiten als ihr größeres Äquivalent, werden erhöhte Anforderungen an die Temperaturbeständigkeit (in der vorliegenden Anmeldung wird die Temperaturbeständigkeit über die Erweichungstemperatur der Beschichtung definiert) der Drahtbeschichtungen gestellt. Eine weitere Anforderung an die Produkte ist in vielen Anwendungen eine zügige Lötbarkeit der Produkte, um die Enden der beschichteten Drähte schnell und auf einfache Weise elektrisch leitend mit anderen Komponenten zu verbinden.

Die heute üblicherweise eingesetzten Elektroisolierlackbeschichtungsmittel umfassen die konventionellen hochtemperaturbeständigen Beschichtungen in denen Polyhydantoine (z.B. FR-A 1 484 694, DE-A 246020), Polyimide, Polyamidimide (z.B. DE-A 3 544 548, DE-A 3 714 033, DE-A 3 817 614), oder Polyesteramidimide (z.B. US-A 3 652 471, US-A 4 997 891, DE-A 3 249 497) die wesentliche Bindemittelkomponente bilden. Drähte, die mit diesen Produkten beschichtet sind, können jedoch unterhalb einer Temperatur von 400 - 450°C nicht verzinnt werden.

Im Unterschied dazu ermöglichen Elektroisolierlacke auf Polyurethanbasis eine schnelle Verzinnbarkeit bei vergleichsweise niedrigen Temperaturen. Die Bindemittel der hierbei zum Einsatz gelangenden Drahtlacke basieren auf Kombinationen aus Polyesterpolyolen und Phenol oder Alkanol-blockierten Polyisocyanaten (DE-A 1 170 096 oder DE-A 2 626 175). Eine Verbesserung der Verzinnbarkeit kann durch Kombination von blockierten Polyisocyanaten mit hydroxy-funktionellen Oligourethanen erreicht werden (DE-A-1 644 794).

In S. Darling, "International Wire Standards-Progress Towards Hamonization" in Proceedings 19th EEI Conference, Chicago 25. Bis 28 Sept. 1989, S. 56 werden zwar Polyesterimide mit einem Temperaturindex von 180°C als "solderable" (lötbar, verzinnbar) bezeichnet, allerdings ist die Verzinnbarkeit ebenfalls erst bei Temperaturen oberhalb von 400°C gegeben.

Polyesterimide mit hohem Hydroxylgruppengehalt, in Kombination mit wärmebeständigen blockierten Polyisocyanaten sind bei 370°C verzinnbar, zeigen gegenüber den üblichen Polyesterimiden aber stark abfallende Eigenschaften bezüglich tan δ Knickpunkt und Erweichungstemperatur. Ähnliche Nachteile weisen auch Amidimid-Polyurethankombinationen auf, die in EP 365 877 beschreiben sind. In der EP-A 752 434 wird die Erhöhung der Erweichunstemperatur lötbarer Drähte durch Einführung von Amid-/Imidgruppenhaltigen blockierten Polyisocyanten beschrieben. Im Vergleich zur US-A 4 997 891 wird dadurch zwar eine deutlich verbesserte Lötbarkeit erzielt, doch ist die Erweichungstemperatur nicht verbessert.

Aus der EP-A 231 509 sind Carbodiimid- und/oder Uretonimingruppen enthaltende Polyisocyante sowie ihre Verwendung zur Drahtlackierung bekannt. Diese Polyisocyante eignen sich je nach Reaktionspartner zur Herstellung verzinnbarer (Bsp. 1 der EP-A 231 509) oder aber hitzebeständiger Lackdrähte (Bsp. 3 der EP-A 231 509).

Nach der EP-A 287 947 werden hitzebeständige Elektroisolierlacke durch Verwendung ungesättigter Carbonsäuren in Kombination mit Carbodiimid- und/oder Uretonimingruppen enthaltenden Polyisocyanaten erhalten. Wird bei der Herstellung des Hydantoinstrukturen aufweisenden Drahtlacks eine isocyanurathaltige Verbindungen (EP-A 287 947 Bsp. 3) verwendet, so erhält man einen bei 420°C verzinnbaren Drahtlacklack mit einer Erweichungstemperatur von 250°C; enthält die Mischung neben den OH-haltigen Blockierungsmittel keine weiteren OH-Komponenten, so erhält man nicht verzinnbare Produkte mit Erweichungstemperaturen > 300°C (EP-A 287 947 Bsp. 2).

Ebenfalls zu hitzebeständigen Lackdrähten führt die Verwendung von N,N',N"-Tris-(2-hydroxyethyl)-isocyanurat als Zusatzmittel für Drahtlacke auf Polyurethanbasis (DE-A 3 133 571).

Die US-A 5 254 659 beschreibt die Herstellung hitzebeständiger, lötbarere Drahtlacke aus Polyimiden und imidmodifizierten Polyurethanen. Aufgrund der niedrigen Festkörpergehalte der Bindemittel und den für die Drahtlackindustrie ungewöhnlichen und darüber hinaus vergleichsweise teuren Lösungsmittel kommt die Verwendung solcher Produkte sicherlich nur in Ausnahmefällen und zur Beschichtung dünner Drähte zum Einsatz.

Zusammenfassend kann festgestellt werden, dass die Lehre des vorbekannten Standes der Technik sich darin erschöpft, Elektroisolierlacke mit hohem Wärmestand (> 300°C) herzustellen, die bei 390°C nicht oder nur sehr langsam verzinnbar sind, oder aber solche herzustellen, die bei 390°C schnell verzinnbar sind aber nur einen Wärmestand von ≤ 270°C aufweisen.

Es war daher die der Erfindung zugrundeliegende Aufgabe, ein Beschichtungsmittel für hitzeresistente Substrate, insbesondere zur Drahtlackierung von Drähten zur Verfügung zu stellen, welches beide Vorteile - Hitzebeständigkeit > 270°C einerseits und verbesserte Verzinnbarkeit bei einer Temperatur von 390°C andererseits - in sich vereint.

Diese Aufgabe konnte mit Hilfe der nachstehend näher beschriebenen Elektroisolierlackbindemittel gelöst werden. Der Erfindung liegt der überraschende experimentelle Befund zugrunde, dass durch Verwendung bestimmter Harnstoff- und/oder Hydantoin-Gruppen aufweisender blockierter Polyisocyanate Elektroisolierlacke hergestellt werden können, die trotz ihrer excellenten Temperaturbeständigkeit bei Temperaturen von < 400°C lötbar sind.

Gegenstand der vorliegenden Erfindung sind Bindemittel für Elektroisolierlacke aus
A) mindestens einem Harnstoff- und/oder Hydantoin-Gruppen aufweisenden blockierten Polyisocyanat,
B) mindestens einer Ester- und/oder Imid- und/oder Amid- und/oder Urethangruppen aufweisenden Hydroxylkomponente,
C) organischen Lösemitteln sowie
D) ggf. weiteren Hilfs- und Zusatzstoffen,
dadurch gekennzeichnet, dass die blockierte Polyisocyanatkomponente A) hergestellt wird durch Umsetzung von
a) 40 - 60 Gew. % eines organischen Polyisocyanats oder eines Gemisches organischer Polyisocyanate mit
b) 5 - 5 Gew. % mindestens eines Asparginsäureesters,
c) gegebenenfalls 0,1 - 10 Gew. % einer Polyhydroxyverbindung mit einem Molgewicht zwischen 62 und 3000 g/mol
d) und 25 - 45 Gew. % eines Blockierungsmittel für NCO-Gruppen, wobei das Verhältnis von nicht umgesetzten Isocyanatgruppen zu Blockierungsmitteln 1:0,8 bis 1:2 beträgt

Aus den EP-A 744 424, EP-A 744 425 und EP-A 744 426 sind blockierte Polyisocyanate mit Hydantoin- bzw. Harnstoffstruktur, wie sie auch in den erfindungsgemäßen Drahtlackbindemitteln prinzipiell als Komponente A) einzusetzen sind, bekannt. Gemäß der Lehre der genannten Veröffentlichungen zeichnen sich diese Verbindungen durch eine verbesserte thermische Stabilität aus und eignen sich besonders zur Elektrotauchlackierung von Kraftfahrzeugen. In der US-A 3,549,599 wird die Herstellung von Polyhydantoinen aus Asparaginsäureestern sowie die hohe Temperaturbeständigkeit der damit erhaltenen Produkte beschrieben. Aus der Lehre dieser Anmeldung auch in Verbindung mit anderen Veröffentlichungen kann der Fachmann weder einen Hinweis bzgl. der Herstellung lötbarer, hochtemperaturbeständiger Drahtlackbindemittel entnehmen, noch die Verwendung dieser Substanzen zur Herstellung lötbarer Drahtlackbindemittel ableiten.

Zur Herstellung der erfindungsgemäß einzusetzenden blockierten Lackpolyisocyanate A) eignen sich als Ausgangspolyisocyanate a) aromatische, aliphatische oder cycloaliphatische Polyisocyanate, bevorzugt Polyisocyanate eines einheitlichen oder im Mittel durchschnittlichen Molekulargewichts von 140 - 500 mit einer im statistischen Mittel durchschnittlichen NCO-Funktionalität von maximal 2,6.

Vorzugsweise enthält das zur Herstellung der blockierten Polyisocanatkomponente A) eingesetzte Polyisocyanat/-gemisch a) aromatisch gebundene Isocyanatgruppen einer im statistischen Mittel durchschnittlichen NCO-Funktionalität von 2 bis 2,2 und eines, gegebenenfalls im statistischen Mittel durchschnittlichen, Molekulargewichts von 174 - 300.

Solche Polyisocyanate sind beispielsweise 1,4-Phenylendiisocyanat, 2,4- und 2,6-Diisocyanatotoluol (TDI) sowie beliebige Gemische dieser Isomeren, 4,4'-, 2,4'- und 2,2'-Diisocyanatodiphenylmethan (MDI) oder beliebige Gemische dieser Isomeren oder Gemische dieser Isomeren mit ihren höheren Homologen, wie sie in an sich bekannter Weise durch Phosgenierung von Anilin/ Formaldehyd-Kondensaten erhalten werden, 1,5-Naphthylendiisocyanat, 1,4-Butandiisocyanat, 2- Methylpentan-1,5-diisocyanat, 1,5-Hexandiisocyanat, 1,6-Hexandiisocyanat (HDI), 1,3- und 1,4-Cyclohexandiisocyanat sowie beliebige Gemische dieser Isomeren, 2,4- und 2,6-Diisocyanato-1-methylcylohexan sowie beliebige Gemische dieser Isomeren, 3,5,5-Trimethyl-3-isocyanatomethylcylohexanisocyanat (IPDI) und Dicyclohexylmethan-2,4'- und -4,4'diisocyanat und beliebige Gemische dieser Diisocyanate.

Bevorzugt werden als Ausgangspolyisocyanate a) solche mit aromatisch gebundenen Isocyanatgruppen mit einer im statistischen Mittel durchschnittlichen NCO-Funktionalität von 2 bis 2,2 und eines gegebenenfalls im statistischen Mittel durchschnittlichen Molekulargewichts von 174 - 300. Ganz besonders bevorzugt einzusetzende Diisocyanate sind 2,4-Diisocyanatotoluol und 2,6-Diisocyanatotoluol, sowie die aus diesen Isomeren bestehenden technischen Gemische, sowie 4,4'-, 2,4'-und 2,2'-Diisocyanatodiphenylmethan oder Gemische dieser Isomeren oder Gemische dieser Isomeren mit ihren höheren Homologen, wie sie in an sich bekannter Weise durch Phosgenierung von Anilin/Formaldehyd-Kondensaten erhalten werden oder auch beliebige Gemische der hier genannten aromatischen Polyisocyanate.

Zur Herstellung der erfindungsgemäß einzusetzenden blockierten Lackpolyisocyanate A) eignen sich als Komponente b) Asparaginsäureester der allgemeinen Strukturformel (b) 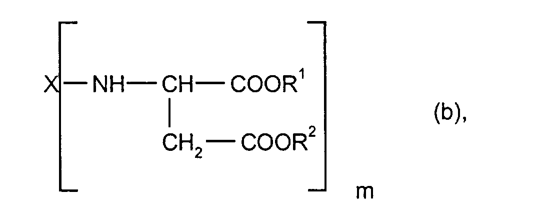 in welcher
- X: für einen m-valenten, gegebenenfalls ein oder mehrere Heteroatome enthaltenden organischen Rest steht, wie er durch Entfernung der primären Aminogruppe bzw. -gruppen aus einem entsprechenden, (cyclo)aliphatisch bzw. araliphatisch gebundene primäre Aminogruppen aufweisenden Mono- oder Polyamin des Molekulargewichtsbereichs 60 bis 6000 erhalten werden kann, und der weitere, gegenüber Isocyanatgruppen reaktive und/oder bei Temperaturen bis 100°C inerte funktionelle Gruppen enthalten kann, steht,
- R¹ und R²: unabhängig voneinander für einen aliphatischen Rest mit 1 bis 10 C-Atomen, einen aromatischen Rest mit 6 bis 20 C-Atomen, einen araliphatischen Rest mit 7 bis 20 C-Atomen stehen , wobei R¹ und R² auch für gleiche Reste stehen können und
- m: für die Zahl 1,2,3 oder 4 steht,
die gemäß der Lehre der EP-A 403 921, DE-A 1 670 812 und DE-A 2 158 945 in bekannter Weise durch Umsetzung einer primäre Amingruppen enthaltenden Komponente i) 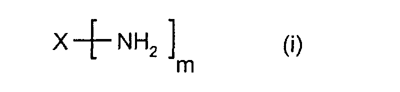 worin
- X und m: die oben angegebene Bedeutung haben,
mit Fumarsäureestern und/oder Maleinsäureestern der Formel (ii) 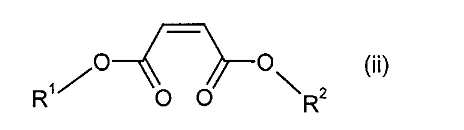 in welcher
R¹ und R² die oben angegebene Bedeutung haben, erhalten werden.

Vorzugsweise stehen die Reste R¹ und R² für organische Reste mit 1 bis 9 Kohlenstoffatom stehen, besonders bevorzugt sind Reste R¹ und R² mit 1 bis 4 Kohlenstoffatomen.

Als Amine (i) werden difunktionelle Amine (m = 2) oder Mischungen aus di- und höherfunktionellen Aminen (m = 2 und m = 3 und/oder m = 4) eingesetzt, so dass die mittlere Funktionalität der Asparaginsäureester ≥ 2 ist. Bevorzugt geeignet sind Mischungen aus di- (m = 2) und trifunktionellen (m = 3) Aminen, wobei das Equivalenzverhältnis von di- zu trifunktionellen Aminen 1 : 2 bis 5 : 1 beträgt; besonders bevorzugt geeignet sind Mischungen, wobei das Equivalenzverhältnis von di- zu trifunktionellen Aminen 1 : 1,5 bis 3 : 1 beträgt.

Als Beispiele für geeignete difunktionelle Amine (i) stehen Ethylendiamin, 1,2-Diaminopropan, 1,4-Diaminobutan, 2,5-Diamino-2,5-dimethylhexan, 1,5-Diamino-2-methylpentan (Dytek® A), 1,6-Diaminohexan, 2,2,4- und/oder 2,4,4-Trimethyl-1,6-diaminohexan, 1,11-Diaminoundecan, 1,12-Diaminododecan 1-Amino-3,3,5-trimethyl-5-aminomethylcyclohexan (IPDA), 2,4- und/oder 2,6-Hexahydrotoluylendiamin (H₆TDA), Isopropyl-2,4-und/oder 2,6-diaminocyclohexan, 1,3-Bis-(aminomethyl)-cyclohexan, 2,4'- und/oder 4,4'-Diamino-dicyclohexylmethan, 3,3'-Dimethyl-4,4'-diamino-dicyclohexylmethan (Laromin® C 260), die Isomeren, eine Methylgruppe als Kernsubstituenten aufweisenden Diaminodicyclohexylmethane (= C-Monomethyl-diaminodicyclohexylmethane), 3(4)-Aminomethyl-1-methylcyclohexylamin (AMCA) und 1,3-Bis-(aminomethyl)-benzol.

Als Beispiele für Tri- und höherfunktionelle Amine stehen 4-Aminomethyl-1,8-octandiamin; 2,2',2"-Triaminotriethylamin, 1,3,5-Tris-(aminomethyl)-2,4,6-triethylbenzol, Tris-1,1,1-aminoethylethan, 1,2,3-Triamionpropan, Tris-(3-aminopropyl)-amin und N,N,N',N'-Tetrakis-(2-aminoethyl)-ethylendiamin.

Prinzipiell einsetzbar sind niedermolekulare Polyetherpolyamine mit aliphatisch gebundenen primären Aminogruppen, wie sie beispielsweise unter der Bezeichnung Jeffamin® von der Firma Huntsman vertrieben werden.

Die Herstellung der Asparaginsäureester b) kann sowohl in Lösung als auch lösemittelfrei durchgeführt werden. In beiden Fällen erfolgt bevorzugt eine equimolare Umsetzung des Amins mit dem Fumar- bzw. Maleinsäurediester. Das Equivalenzverhältnis von Malein- bzw. Fumarsäureester zu Amin i) beträgt 1,2:1 bis 1:2. Für den Fall, dass Mischungen der Asparaginsäureester als Komponente b) eingesetzt werden, kann die Herstellung der Asparaginsäureester getrennt oder in einem Reaktionsgefäß erfolgen.

Gegebenenfalls können bei der Herstellung des blockierten Polyisocyanats A) niedermolekularere Polyhydroxyverbindugen c) in untergeordneten Mengen von ca. 0,1 bis 5 Gew.-% mitverwendet werden. Als niedermolekularere Polyhydroxyverbindugen c) kommen vorzugsweise Diole und/oder Triole des Molekulargewichtsbereichs 62-350, weiterhin auch Polyhydroxyverbindungen mit Molekulargewichten zwischen 350 und 3.000 in Betracht. Geeignete Polyhydroxyverbindungen c) des Molekulargewichtsbereiches 62 - 350 sind beispielsweise Ethylenglykol, Propandiole, Butandiole, Hexandiole, Di-, Tri- oder Tetraethylenglykol, Di-, Tri- oder Tetrapropylenglykol, Neopentylglykol, 2-Ethyl-1,3-hexandiol, 2,2,4-Trimethyl-1,3-pentandiol, 1,4-Bis(hydroxymethyl)-cyclohexan, 2,2-Bis(4-hydroxycydo- hexyl)-propan, Glycerin, Hexantriol, N,N',N"-Tris-(2-hydroxyethyl)-isocyanurat (THEIC) und Pentaerythrit. Höhermolekulare Polyhydroxyver-bindungen c) sind beispielsweise die bekannten Polyhydroxypolyester, wie sie aus Dicarbonsäuren wie Phthalsäure, Isophthalsäure, Terephthalsäure oder Adipinsäure mit überschüssigen Polyolen der obengenannten Art erhalten werden. Als höhermolekulare Polyole c) können ebenfalls an sich bekannte Polyhydroxypolyether, wie sie durch Alkoxylierung von niedermolekularen Startermolekülen zugänglich sind, eingesetzt werden.

Als Blockierungsmittel d) sind die zur Blockierung von Isocyanatgruppen üblichen monofunktionellen Verbindungen des Molekulargewichtsbereichs 60 bis 300, vorzugsweise 87 bis 160 geeignet, wie sie z.B. in Progress in Organic Coatings **3** 73 ff (1975) und **9** 3 ff (1981) genannt sind. Bevorzugt sind Phenole, aliphatische Alkohole, Oxime, Lactame, Pyrazole. Beispielhaft seien als Blockierungsmittel d) genannt: Phenol, Kresol, Xylenol sowie deren technische Isomerengemische, Isopropanol, Cyclohexanol, 1-Methoxy-2-propanol, Diethylenglykolmonoethylether, Benzylalkohol, Butanonoxim, Cyclohexanonoxim, ε-Caprolactam, Dimethylpyrazole sowie gegebenenfalls auch Mischungen von Blockierungsmitteln. Ganz besonders bevorzugt sind Phenol, Kresole oder Xylenole.

Gemäß einer bevorzugten Ausführungsform zur Herstellung der blockierten Polyisocyanat-komponente (A) wird das Ausgangsdiisocyanat a) mit dem Blockierungsmittel d) im angegebenen Mengenverhältnis blockiert. Die Blockierung erfolgt in Abhängigkeit von der Art des Blockierungsmittels im Temperaturbereich von 20 - 200°C, bevorzugt bei 60 - 160°C, bis der berechnete NCO-Gehalt erreicht oder geringfügig unterschritten ist. Nach beendeter Blockierung wird ein Lösungsmittel oder Lösungsmittelgemisch C), das auch identisch mit dem Blockierungsmittel d) sein kann bzw. dieses enthalten kann, zugegeben.

In einer zweiten Reaktionsstufe wird die Umsetzung des teilblockierten Diisocyanats mit dem Gemisch aus di- und höherfunktionellen Asparaginsäureestern b) und gegebenenfalls einer Hydroxyverbindung c), im Temperaturbereich von 60-200°C, bevorzugt 80-130°C, durchgeführt, bis der freie NCO-Gehalt < 1% beträgt. Der bei der Hydantoinbildung abgespaltene Alkohol kann entweder aus dem Reaktionsgemisch unter reduziertem Druck abdestilliert werden, oder er verbleibt im Reaktionsgemisch.

Wenn gelöste Produkte hergestellt werden, kann das Lösungsmittel bzw. das Lösungsmittelgemisch C) wie bei der bevorzugten Ausführungsform beschreiben z.B. nach der Blockierung zugegeben werden; in weiteren Ausführungsformen kann jedoch auch die als erster Reaktionsschritt durchgeführte Blockierung bereits in Gegenwart eines geeigneten Lösungsmittels durchgeführt werden. Eine weitere Ausführungsform zur Herstellung der blockierten Isocyanate A) kann beispielsweise in einer Eintopfreaktion bestehen, bei welcher Polyisocyanat a), Blockierungsmittel d), Asparaginsäureester b), gegebenenfalls Hydroxyverbindung c) und Lösungsmittel C) gemeinsam aufgeheizt werden. Zur Beschleunigung der Blockierungsreaktion können in der Polyurethanchemie bekannte und im Kunstoffhandbuch, Bd. 7, Polyurethane, S. 92 ff, Carl Hanser Verlag, München Wien 1983) beispielhaft beschriebene Katalysatoren verwendet werden. Die Katalysatoren werden, wenn überhaupt in einer Menge von 0,01 bis 5,0 % bezogen auf die blockierten Polyisocyante (I) eingesetzt.

Ein weiterer Gegenstand der Erfindung ist ein Verfahren zur Herstellung der Bindemittel für Drahtlacke durch Abmischung der blockierten Lackpolyisocyanate A) mit in der Drahtlackbeschichtungstechnologie an sich bekannten Hydroxylkomponenten B) organischen Lösungsmitteln C) und gegebenenfalls Hilfs- und Zusatzstoffen D) bei Raumtemperatur, dadurch gekennzeichnet, dass die Hydroxylkomponente B) in einen Äquivalentverhältnis von blockierten Isocyanatgruppen der Komponente A) zu Hydroxylgruppen der Komponente B) von 1:1,5 bis 2:1 vorzugsweise 1:1,3 bis 1,5:1 eingesetzt wird.

Als Hydroxylkomponente B) einsetzbar sind die aus der Drahtlacktechnologie an sich bekannten Hydroxyl-Endgruppen aufweisenden Harze mit Ester- und/oder Amid- und/oder Imid- und/oder Urethanstrukturen. Bevorzugt einsetzbar als Hydroxylkomponente B) sind OH-terminierte Polyamidimide und/oder Polyimide mit einem Amid- und/oder Imidstrukturanteil von 0,5-10 Gew. % (berechnet als -CO-N<, MG = 42). Besonders bevorzugt einsetzbar als Komponente B) sind polyfunktionelle OH-terminierte Polyurethane mit einem Urethangruppengehalt von 2-20 Gew. % und insbesondere mit einem Urethangruppengehalt von 4-15 Gew.-%.

Als Lösemittelkomponente C) kommen alle in der Lacktechnologie üblichen organischen Lösemittel in Betracht, die gegenüber Isocyantgruppen inert sind, wie z.B. Ethylacetat, Butylacetat, Ethylenglykolmonomethyl- oder -ethylacetat, 1-Methoxypropyl-2-acetat, 2-Butanon, 4-Methyl-2-pentanon, Cyclohexanon, Toluol, Xylol, Solventnaphtha oder deren Gemische. Ebenfalls verwendbar, jedoch weniger bevorzugt sind Weichmacher wie z.B. solche auf Basis von Phosphorsäure-, Sulfonsäure- oder Phthalsäureester. Außer den gegenüber NCO-Gruppen inerten Lacklösemitteln ist es aber auch möglich, anteilig gegenüber NCO-Gruppen reaktive Lösungsmittel mitzuverwenden. Geeignet sind bevorzugt monofünktionelle, aliphatische, cycloaliphatische, araliphatische Alkohole oder auch Phenole wie z.B. Isopropanol, n-Butanol, n-Octanol, 2-Methoxyethanol, 2-Ethoxyethanol, Diethylenglykolmonomehtylether, Diethylenglycolmonoethylether, 1-Methoxy-2-propanol; Cycloalkonole wie Benzylalkohol, oder Phenole wie Kresol Xylenol sowie deren technische Isomerengemische.

Aus dem Umstand, dass die hier als Lösungsmittel genannten einwertigen Alkohole oder Phenole auch als Blockierungsmittel d) in Betracht kommen können, geht bereits hervor, dass bei Verwendung derartiger Alkohole oder Phenole als Lösungsmittel diese nicht in die Berechung der Mengenverhältnisse der Reaktionspartner a) bis d) eingehen.

Als Hilfs- und Zusatzstoffe D) können die aus der Elektroisolierlacktecchnologie an sich bekannte Katalysatoren, Pigmente und/oder Fließmittel erfindungsgemäß eingesetzt werden.

Die erfindungsgemässen Elektroisolierlackbindemittel sind im Bereich Raumtemperatur bis mäßig erhöhter Temperatur (ca.20-50°C) lagerbeständig und reagieren erst beim Erhitzen auf Temperaturen oberhalb 60°C, vorzugsweise von 100-500°C und insbesondere von 180-400°C unter gleichzeitigem Verdampfen der gegebenenfalls vorliegenden flüchtigen Bestandteile zu vernetzten Kunststoffen aus.

Die Applikation der Lacke erfolgt nach den an sich bekannten Tauch-, Rollenauftrags-, Düsen oder Saugfilzverfahren, wobei sich die Trocknung, d.h. die Aushärtung der Lackschichten in den üblichen Trockenöfen innerhalb eines Temperaturbereiches von 100 - 500°C, und insbesondere von 180 - 400°C anschließt.

Ein weiterer Gegenstand der Erfindung ist auch die Verwendung der erfindungsgemäßen Bindemittel zur Beschichtung von Substraten aus Holz, Kunststoff, Metallen, Halbmetallen oder mineralischen Materialien, weiterhin Glas, Glasfasern, gebündelten Glasfasern.

Aufgrund ihrer Eigenschaften eignen sich die erfindungsgemäßen Bindemittel hervorragend als Elektroisolierlackbindemittel. Sie besitzen insbesondere die gute Lötbarkeit, hohe Erweichungs- und hohe Hitzeschocktemperatur und gute Durchschlagfestigkeit. Wegen der ausgezeichneten elektrischen und mechanischen Eigenschaften der erfindungsgemässen Bindemittel eignen sich die erfindungsgemäßen Bindemittel weiterhin zur Herstellung von Isoliergeweben oder zur Imprägnierung von Elektromotoren.

### Beispiele

### Beispiel 1 Herstellung eines Asparaginsäureesters b)

173 g 4-Aminomethyl-1,8-octandiamin und 116 g 2-Mehtyl-1,5-pentandiamin werden vorgelegt und unter Rühren mit 860 g Maleinsäurediethylester versetzt, so dass eine Temperatur von 50°C in der Reaktionsmischung nicht überschritten wird. Anschließend lässt man 20 h bei 60°C nachrühren.

### Beispiel 2 Herstellung eines blockierten Lackpolyisocyanats A)

Eine Mischung bestehend aus 178,3 g Asparaginsäureesters aus Beispiel 1, 320 g m-Kresol und 0,09 g DABCO (1.4 Diaza-{bicyclo[2.2.2]octan}) werden in 230 g MPA gelöst und innerhalb von 2 h bei 80°C zu 500 g eines technischen Isocyanatgemisches der Diphenylmethanreihe mit einem NCO-Gehalt von 32,5 % (Desmodur® VL 50, Handelsprodukt der Bayer AG) zugetropft. Die Reaktionstemperatur wird unter Berücksichtigung der Exothermie bei max. 120°C belassen, bis der freie NCO-Gehalt weniger als 0,5 % beträgt. Der berechnete, blockierte NCO-Gehalt liegt bei 10,2 %.

### Beispiel 3 Herstellung eines blockierten Lackpolyisocyanats A)

Eine Mischung bestehend aus 184,1 g Asparaginsäureesters aus Beispiel 1, 360 g m-Kresol und 0,09 g DABCO werden in 250 g MPA gelöst und innerhalb von 2 h bei 80°C zu 500 g 4,4'-Diphenylmethandiisocyanat zugetropft. Die Reaktionstemperatur wird unter Berücksichtigung der Exothermie bei max. 120°C belassen, bis der freie NCO-Gehalt weniger als 0,5 % beträgt. Der berechnete, blockierte NCO-Gehalt liegt bei 10,4%.

### Beispiel 4 Herstellung eines blockierten Lackpolyisocyanats A)

Eine Mischung bestehend aus 140,8 g Asparaginsäureester (hergestellt aus 17,3 g 4-Aminomethyl-1,8-octandiamin, 23,2 g 2-Mehtyl-1,5-pentandiamin und 100,3 g Maleinsäuredimethylester gemäß der Verfahrensweise aus Beispiel 1), 360 g m-Kresol und 0,09 g Diazabicyclooctan werden in 250 g Methoxypropylacetat gelöst und innerhalb von 2 h bei 80°C zu 500 g Desmodur® 44 M (Handelsprodukt der Bayer AG) zugetropft. Die Reaktionstemperatur wird unter Berücksichtigung der Exothermie bei max. 120°C belassen, bis der freie NCO-Gehalt weniger als 0,5 % beträgt. Der berechnete, blockierte NCO-Gehalt liegt bei 11,1 %.

### Beispiel 5 Herstellung eines blockierten Lackpolyisocyanats A)

Eine Mischung bestehend aus 105,0 g Asparaginsäureester (hergestellt aus 17,3 g 4-Aminomethyl-1,8-octandiamin, 12,8 g 2-Mehtyl-1,5-pentandiamin und 75,0 g Maleinsäuredimethylester hergestellt gemäß der Verfahrensweise aus Beispiel 1, 8,0 g 1,4-Butandiol, 360 g m-Kresol und 0,09 g Diazabicyclooctan werden in 250 g MPA gelöst und innerhalb von 2 h bei 80°C zu 500 g Desmodur® 44 M zugetropft. Die Reaktionstemperatur wird unter Berücksichtigung der Exothermie bei max. 120°C belassen, bis der freie NCO-Gehalt weniger als 0,5 % beträgt. Der berechnete, blockierte NCO-Gehalt liegt bei 11,3 %.

### Beispiel 6 Herstellung eines blockierten Lackpolyisocyanats A)

Das Umsetzungsprodukt aus 17,4 g 4-Aminomethyl-1,8-octandiamin, 23,2 g 2-Methyl-1,5-pentandiamin und 118,3 g Maleinsäurediethylester, hergestellt gemäß der Verfahrensweise aus Beispiel 1, wird gemeinsam mit 360 g Kresol und 0,09 g Diazabicyclooctan in 250 g MPA gelöst und innerhalb von 2 h bei 80°C zu 500 Desmodur® 44 M zugetropft. Die Reaktionstemperatur wird unter Berücksichtigung der Exothermie bei max. 120°C belassen, bis der freie NCO-Gehalt weniger als 0,5 % beträgt. Der berechnete, blockierte NCO-Gehalt liegt bei 10,9 %

### Beispiel 7 Herstellung eines Lackpolyisocyanates A)

Das Umsetzugsprodukt aus 11,7 g 4-Aminomethyl-1,8-octandiamin, 28,8 g 2-Mehtyl-1,5-pentandiamin und 120,0 g Maleinsäurediethylester, hergestellt gemäß der Verfahrensweise aus Beispiel 1 wird gemeinsam mit 360 g Kresol und 0,09 g DABCO in 250 g MPA gelöst und innerhalb von 2 h bei 80°C zu 500 g Desmodur® 44 M zugetropft. Die Reaktionstemperatur wird unter Berücksichtigung der Exothermie bei max. 120°C belassen, bis der freie NCO-Gehalt weniger als 0,5 % beträgt. Der berechnete, blockierte NCO-Gehalt liegt bei 10,9 %

In den folgenden Beispielen zur Beschichtung von Kupferdrähten wurde eine horizontale Drahtlackieranlage der Fa. Aumann, Espelkamp, BRD, Typ FLK 240 mit einer Ofenlänge von 2,4 m (leicht modifiziert für mittelstarke Drahtdurchmesser) verwendet. Der Kupferdraht von 0,5 mm Durchmesser wurde mittels Düsenapplikation in 7 Durchzügen bei einer Ofentemperatur von 450°C/500°C mit einer Geschwindigkeit von 14-16 m/min lackiert.

Als OH-Komponente B) wurde ein in MPA gelöstes, hydroxyfunktionelles Polyurethan (OH-Zahl = 105) hergestellt aus 100 g 4,4'-Diisocyanatodiphenylmethan, 14,1 g Diethylenglykol, 12,0 g 1,3- Butandiol und 35,7g Trimethylolpropan verwendet.

### Beispiel 8 Herstellung eines erfindungsgemässen Elektroisolierlacks

Zu 412 g des gemäß Beispiel 2 hergestellten Lackpolyisocyanates A) werden 515 g des in MPA gelösten Hydroxyurethans B) zugesetzt und mit 605 g Kresol verdünnt. Ein mit diesem Lack beschichteter Draht ist bei 390°C innerhalb von 8 sec verzinnbar, der tan δ Knickpunkt liegt bei 17°C, die Erweichungstemperatur nach IEC 851, Teil 6, 4.1.2 beträgt 300°C. Der Lackfilm zeigt hohe Flexibilität: nach 20 % Vordehnung lässt sich der Draht um einen zylindrischen Dorn von 0.5 mm wickeln, ohne dass der Lackfilm Risse aufweist. Der Hitzeschock ist mit 5 % Vordehnung auf einem 0,5 mm Dorn nach 30 min bei 200°C in Ordnung.

### Beispiel 9 Herstellung eines erfindungsgemässen Elektroisolierlacks

Zu 405 g des gemäß Beispiel 3 hergestellten Lackpolyisocyanates A) werden 515 g des in MPA gelösten Hydroxyurethans B) zugesetzt und mit 578 g MPA verdünnt.

Ein mit diesem Lack beschichteter Draht ist bei 390°C innerhalb von 6 sec verzinnbar, der tan δ Knickpunkt liegt bei 162°C, die Erweichungstemperatur nach IEC 851, Teil 6, 4.1.2 beträgt 300°C. Der Lackfilm zeigt hohe Flexibilität: nach 20% Vordehnung lässt sich der Draht um einen zylindrischen Dorn von 0.5 mm wickeln, ohne dass der Lackfilm Risse aufweist. Der Hitzeschock ist mit 10 % Vordehnung auf einem 0,5 mm Dorn nach 30 min bei 200°C in Ordnung.

### Beispiel 10 Herstellung eines erfindungsgemässen Elektroisolierlacks

Zu 326 g des gemäß Beispiel 4 hergestellten Lackpolyisocyanates A) werden 515 g des in MPA gelösten Hydroxyurethans B) zugesetzt und mit 625 g MPA verdünnt.

Ein mit diesem Lack beschichteter Draht ist bei 390°C innerhalb von 5 sec verzinnbar, der tan δ Knickpunkt liegt bei 175°C, die Erweichungstemperatur nach IEC 851, Teil 6, 4.1.2 beträgt 300°C. Der Lackfilm zeigt hohe Flexibilität: nach 20 % Vordehnung lässt sich der Draht um einen zylindrischen Dorn von 0,5 mm wickeln, ohne dass der Lackfilm Risse aufweist. Der Hitzeschock ist mit 10 % Vordehnung auf einem 0,5 mm Dorn nach 30 min bei 200°C in Ordnung.

### Beispiel 11 Herstellung eines erfindungsgemässen Elektroisolierlacks

Zu 372 g des gemäß Beispiel 5 hergestellten Lackpolyisocyanates A) werden 515 g des in MPA gelösten Hydroxyurethans B) zugesetzt und mit 565 g MPA verdünnt.

Der Lackdraht ist bei 390°C innerhalb von 4 sec verzinnbar, der tan δ Knickpunkt liegt bei 172°C, die Erweichungstemperatur nach IEC 851, Teil 6, 4.1.2 beträgt 300°C. Der Lackfilm zeigt hohe Flexibilität: nach 20 % Vordehnung lässt sich der Draht um einen zylindrischen Dorn von 0,.5 mm wickeln, ohne dass der Lackfilm Risse aufweist. Der Hitzeschock ist mit 5 % Vordehnung auf einem 0,5 mm Dorn nach 30 min bei 200°C in Ordnung.

### Beispiel 12 Herstellung eines erfindungsgemässen Elektroisolierlacks

Zu 385 g des gemäß Beispiel 6 hergestellten Lackpolyisocyanates A)werden 515 g des in MPA gelösten Hydroxyurethans B) zugesetzt und mit 578 g MPA verdünnt.

Der Lackdraht ist bei 390°C innerhalb von 6 sec verzinnbar, der tan δ Knickpunkt liegt bei 165°C, die Erweichungstemperatur nach IEC 851, Teil 6, 4.1.2 beträgt 290°C. Der Lackfilm zeigt hohe Flexibilität: nach 20 % Vordehnung lässt sich der Draht um einen zylindrischen Dorn von 0,5 mm wickeln, ohne dass der Lackfilm Risse aufweist. Der Hitzeschock ist mit 10% Vordehnung auf einem 0,5 mm Dorn nach 30 min bei 200°C in Ordnung.

### Beispiel 13 Herstellung eines erfindungsgemässen Elektroisolierlacks

Zu 386 g des gemäß Beispiel 7 hergestellten Lackpolyisocyanates A) werden 515 g des in MPA gelösten Hydroxyurethans B) zugesetzt und mit 579 g MPA verdünnt.

Der Lackdraht ist bei 390°C innerhalb von 4 sec verzinnbar, der tan δ Knickpunkt liegt bei 165°C, die Erweichungstemperatur nach IEC 851, Teil 6, 4.1.2 beträgt 300°C. Der Lackfilm zeigt hohe Flexibilität: nach 20 % Vordehnung lässt sich der Draht um einen zylindrischen Dorn von 0.5 mm wickeln, ohne dass der Lackfilm Risse aufweist. Der Hitzeschock ist mit 10% Vordehnung auf einem 0,5 mm Dorn nach 30 min bei 200°C in Ordnung.

## Patentansprüche

1. Bindemittel aus:
A) mindestens einem Harnstoff- und/oder Hydantoin-Gruppen aufweisenden blockierten Polyisocyanat,
B) mindestens einer Ester- und/oder Imid- und oder Amid- und oder Urethangruppen aufweisenden Hydroxylkomponente,
C) organischen Lösemitteln sowie
D) ggf. weiteren Hilfs- und Zusatzstoffen
**dadurch gekennzeichnet, dass** die blockierte Polyisocyanatkomponente A) hergestellt wird durch Umsetzung von
a) 40 - 60 Gew.-% eines organischen Polyisocyanats oder eines Gemisches organischer Polyisocyanate mit
b) 5 - 25 Gew.- % mindestens eines Asparginsäureesters,
c) gegebenenfalls 0,1-10 Gew.-% einer Polyhydroxyverbindung mit einem Molgewicht zwischen 62 und 3000 g/mol
d) und 25-45 Gew.- % eines Blockierungsmittel für NCO-Gruppen, wobei das Verhältnis von nicht umgesetzten Isocyanatgruppen zu Blockierungsmitteln 1:0,8 bis 1:2 beträgt

2. Bindemittel gemäß Anspruch 1, **dadurch gekennzeichnet, dass** das zur Herstellung der blockierten Polyisocyanatkomponente A) eingesetzte Polyisocyanat/gemisch a) aromatisch gebundene Isocyanatgruppen einer im statistischen Mittel durchschnittlichen NCO-Funktionalität von 2-2,2 und eines, gegebenenfalls im statistischen Mittel durchschnittlichen, Molekulargewichts von 174-300 enthält.

3. Elektroisolierlacke gemäß Anspruch 1 und 2, **dadurch gekennzeichnet, dass** der zur Herstellung der Polyisocyanatkomponente A) eingesetzte Asparaginsäureester b) di- und trifunktionellen Amingruppen in einem Verhältnis von 1:2 bis 5:1 aufweist.

4. Bindemittel gemäß Ansprüchen 1 bis 3, **dadurch gekennzeichnet, dass** als Komponente B) hydroxyfunktionelle Polyurethane eingesetzt werden.

5. Verfahren zur Herstellung der Bindemittel für Drahtlacke durch Abmischen der blockierten Lackpolyisocyanate A) mit in der Drahtlackbeschichtungstechnologie an sich bekannten Hydroxykomponenten B) organische Lösungsmitteln C) und gegebenenfalls Hilfs- und Zusatzstoffen D) bei Raumtemperatur, **dadurch gekennzeichnet, dass** die Hydroxylkomponente B) in einen Äquivalentverhältnis von blockierten Isocyanatgruppen der Komponente A) zu Hydroxylgruppen der Komponente B) von 1:1,5 bis 2:1 vorzugsweise 1:1,3 bis 1,5:1 eingesetzt wird.

6. Verwendung von Bindemitteln gemäss Anspruch 1 zur Beschichtung von Substraten.

7. Verwendung von Bindemitteln gemäss Anspruch 1 zur Herstellung von Elektroisolierlacken.
